# EUROPEAN PATENT SPECIFICATION

(11) **EP 1 661 194 B1**
(45) Date of publication and mention of the grant of the patent: **18.11.2009**
(21) Application number: 04801923.6
(22) Date of filing: 27.08.2004
(51) Int. Cl.: H01M 4/04, H01M 10/38, H01M 10/04

(54) **CYLINDRICAL LITHIUM ION SECONDARY BATTERY**
ZYLINDRISCHE LITHIUMIONEN-SEKUNDÄRBATTERIE
BATTERIE SECONDAIRE ION-LITHIUM CYLINDRIQUE

(30) Priority: 01.09.2003 CN 03140377
(43) Date of publication of application: 31.05.2006
(73) Proprietor: Byd Company Limited, Shenzhen City, Guangdong 518119 (CN)
(72) Inventor: Wang, Chuanfu, BYD Company Ltd, Shenzhen, Guangdong 518119 (CN)
(74) Representative: Böck, Bernhard
(86) International application number: PCT/CN2004/000995
(87) International publication number: WO 2005/022677

(56) References cited:
- EP-A- 0 910 131
- EP-A- 1 202 364
- CN-A- 1 076 313
- CN-A- 1 242 613
- JP-A- 10 125 353
- JP-A- 62 177 869
- US-A- 5 415 948
- US-A- 5 534 369

## Description

### Cross Reference

This application claims priority to a Chinese patent application entitled "Cylindrical Lithium Ion Secondary Batteries" filed on September 1, 2003, having a Chinese Patent Application No. 03140377.8.

### Field of Invention

The present invention relates to a type of cylindrical lithium ion secondary battery, in particular, to a type of highly safe cylindrical lithium ion secondary battery.

### BACKGROUND

Along with the rapid development of the electronic industry and communication industry, people's demand for power for the electronic devices is getting higher and higher. Cylindrical lithium ion secondary battery being a high capacity power source is being used in a variety of areas, especially for laptop batteries. Its electrical characteristics, especially its safety characteristics, are becoming highly important.

Currently, the combined characteristics of the cylindrical lithium ion secondary battery are good. With respect to its safety characteristics, the potential for internal or external short circuiting is the greatest concern, with internal short-circuiting being the greater concern of the two. In practical applications, due to unavoidable shaking or dropping of the battery and thereby easily causing internal short-circuiting within the battery, the battery is required to possess highly safe and flexible characteristics. In the design and improvement of cylindrical lithium ion secondary battery, the most common anti-explosion design is when there is short-circuiting, a safety switch opens and the battery quickly discharges to prevent explosion. For example, Chinese Patent No. CN2556798 describes a cylindrical lithium ion secondary battery having an anti-explosion insert to prevent, due to battery internal or external short-circuiting, the battery temperature and pressure rapidly rising causing the battery to explode. This type of methods, although it can effectively prevent battery explosion causing harm to electronic devices and the user, once the anti-explosion insert is broken, the electrolyte can leak. Due to the breakage, the battery is rendered useless and the corresponding electronic device can no longer function.

Therefore, people begin to study how to raise the safety characteristics when the battery internally short-circuits, and fundamentally control the breakage of the battery. However, as of now, cylindrical lithium ion secondary battery uses a single electrode group formed by a positive electrode, a negative electrode, and a separator all rolled into a cylindrically-shape and uses it as the battery core. This type of battery core has the following problems: when there is an internal short in certain point or certain area, the entire battery becomes short-circuited, where the battery internally generates a large current and instantly discharges. The internal temperature will rapidly increase, increasing the internal pressure, rendering the entire battery useless. During this time, there is no guarantee to its safety-worthiness and the electronic device cannot continue to function. The translated abstract of document JP 62177869 discloses a wound battery with a belt-shaped carbon electrode 1 and an electrode group 5 with protective functional elements to sharply enhance the safety of a battery by forming its terminal plates with such protective functional elements as being broken when electric current exceeding the defined level flows through.

EP 1 202 364 disclose spirally-rolled electrodes for batteries wherein the electrodes having a concentric circle shape or an elliptic shape with positive electrode and negative electrode wound spirally via a separator therebetween has the characteristics as the positive electrode and/or negative electrode consist of the combinations of several electrode plates; each of the combinations in the positive electrode and/or the negative electrode so includes that the total amount of the active material or pseudo-active material which are the main materials for the electrode is substantially constant and; each electrode plate in the electrode plate in the electrode including plural electrodes is wound in series with an interval therebetween.

The EP 0 910 131 shows a lithium secondary battery with a battery case and an internal electrode body contained in the battery case and including a positive electrode, a negative electrode and a separator. The positive electrode and the negative electrode are wound through the separator so that the positive electrode and the negative electrode are not brought into contact with each other. At least one of the positive electrode and negative electrode has two or more divided electrodes.

The US 5,534,369 shows at least one of a positive electrode and a negative electrode constituting an electrode assembly comprising at least two divided electrode portions not connected through electron conduction. The divided electrode portions each have an electrode lead extending outward from a battery container, which has at least two external terminals of the same polarity which is provided by the lead. The external terminals of the same polarity are connected to each other via a resistor having a PTC effect.

Due to the popularity of the cylindrical lithium ion secondary battery in the market place, especially as the primary battery for laptop computers, the above problems must be conquered.

### SUMMARY OF THE INVENTION

An object of the present invention is to provide a type of cylindrical lithium ion secondary battery, where when there is an internal short, the battery voltage does not change and can be continued to be used safely and reliably.

Another object of the present invention is to provide a battery having one of the positive or negative electrodes formed by a number of smaller electrodes where said smaller electrodes are individually wrapped with separation material in order to eliminate any separation areas between the smaller electrodes.

Still another object of the present invention is to provide a battery and manufacturing method thereof where each of the electrodes having a conducting strip for current conduction and yet melts during a short-circuit condition.

Briefly, in the presently preferred embodiment, a type of cylindrical lithium ion secondary battery, having a positive electrode, a negative electrode, and a separator forming a cylindrical electrode group, along with electrolyte all encased in a battery shell and sealed by a battery cover, is disclosed. Here, one of the positive electrode(s) or negative electrode(s) is a belt-shaped electrode, while the other electrode(s) is formed by at least two smaller pieces of electrodes. After stacking the positive electrode(s), the separator, and the negative electrode(s), the stack is rolled to form a cylindrical electrode group and the smaller pieces of electrodes are in mutually disconnected and segregated state. Each of the positive and negative electrodes has a conducting strip for conduction of electrical current with the battery shell or the battery cover.

An advantage of the present invention is that it provides a type of cylindrical lithium ion secondary battery, where when there is an internal short, the battery voltage does not change and can be continued to be used safely and reliably.

Another object of the present invention is to provide a battery having one of the positive or negative electrodes formed by a number of smaller electrodes where said smaller electrodes are individually wrapped with separation material in order to eliminate any separation areas between the smaller electrodes.

Still another object of the present invention is to provide a battery and manufacturing method thereof where each of the electrodes having a conducting strip for current conduction and yet melts during a short-circuit condition.

Briefly, in the presently preferred embodiment, a type of cylindrical lithium ion secondary battery, having a positive electrode, a negative electrode, and a separator forming a cylindrical electrode group, along with electrolyte all encased in a battery shell and sealed by a battery cover, is disclosed. Here, one of the positive electrode(s) or negative electrode(s) is a belt-shaped electrode, while the other electrode(s) is formed by at least two smaller pieces of electrodes. After stacking the positive electrode(s), the separator, and the negative electrode(s), the stack is rolled to form a cylindrical electrode group and the smaller pieces of electrodes are in mutually disconnected and segregated state. Each of the positive and negative electrodes has a conducting strip for conduction of electrical current with the battery shell or the battery cover.

An advantage of the present invention is that it provides a type of cylindrical lithium ion secondary battery, where when there is an internal short, the battery voltage does not change and can be continued to be used safely and reliably.

Another advantage of the present invention is that it provides a battery having one of the positive or negative electrodes formed by a number of smaller electrodes where said smaller electrodes are individually wrapped with separation material in order to eliminate any separation areas between the smaller electrodes.

Still advantage of the present invention is that it provides a battery and manufacturing method thereof where each of the electrodes having a conducting strip for current conduction and yet melts during a short-circuit condition.

The present invention is further described by the figures in conjunction with the description of the embodiments.

### Description of the Figures

Fig. 1 is a side cross-sectional view of the cylindrical lithium ion secondary battery of the present application.
Fig. 2 is an embodiment of the stacked positive and negative electrode and separator prior to rolling of the cylindrical lithium ion secondary battery of the present application.
Fig. 3 is a top cross-sectional view of an embodiment of the cylindrical lithium ion secondary battery of the presents application.
Fig. 4 is a presently preferred embodiment of the stacked positive electrodes (each wrapped in separation material) and negative electrode and separator prior to rolling.
Figs. 5a - 5b illustrate the derivation of the concept where a gap is created when a rectangular shaped electrode is rolled into a cylindrical shaped electrode group.
Figs. 6a - 6c illustrate the different shapes of the electrodes in order to minimize the separation area between two smaller electrodes, according to the invention.

### DETAILS DESCRIPTIONS OF THE PREFERRED EMBODIMENTS

In the present invention, in a presently preferred embodiment, the cylindrical-shaped lithium ion secondary battery has one of the positive or negative electrodes as a belt-shaped electrode and the other electrode formed by at least two smaller electrodes. After arranging and stacking with the separator, it is rolled to form a cylindrical shaped electrode group and the smaller electrodes are mutually non-conductive, with the positive and negative electrodes' conducting strips connected to the battery cover or battery shell. This structure is equivalent to a battery formed by many smaller electrical sources connected together. When one of the smaller electrical source short-circuits, a large current is generated instantaneously, and other smaller electrical sources of the smaller electrodes simultaneously supply current to it, where the current passing through the conducting strip of the electrode instantaneously increases causing it to melt and break. In the manner, it controls and stops the supply and release of electricity from other electrical sources to this short-circuited source. The energy of the short-circuited small electrical source is depleted, while other electrodes providing electrical sources can continue to function. Fundamentally the battery has not changed except for the lowered battery capacity and decreased recharge time, but the battery can continued to be used.

In practical applications, the preferred number of smaller electrodes forming the electrode group is 2-6 pieces. It can selectively vary depending on the size of the battery but not more than 6 pieces, because too many small electrodes will affect battery capacity and complicates the industrial manufacturing process.

Furthermore, in the described cylindrical-shaped electrode group, the belt-shaped electrode is placed externally to the smaller pieces of electrodes.

The advantages of the cylindrical lithium ion secondary battery of the present invention includes: through the cylindrically-shaped electrode group, one of the positive or negative electrodes being a belt-shaped electrode and the other electrode formed by at least two smaller electrodes; when the battery short-circuits internally at a certain location, the damage is limited to the electrode at that location, depleting the capacity of the electrode at that location, and resulting in minimal changes to the battery where the battery may continued to be used in a safe and reliable manner.

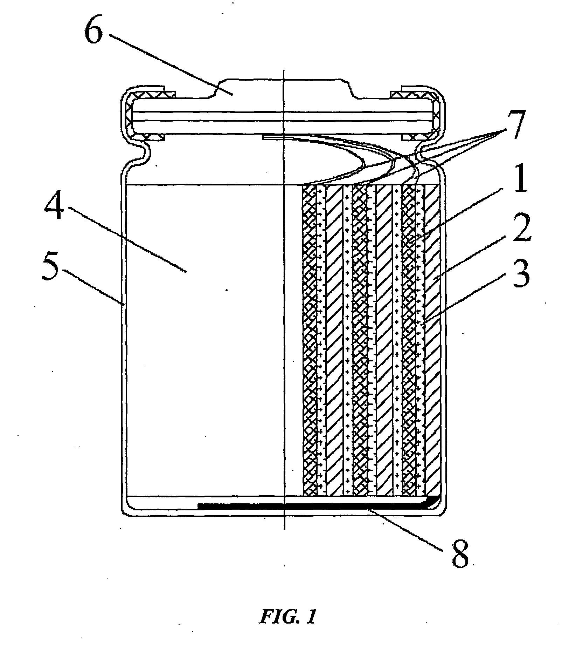

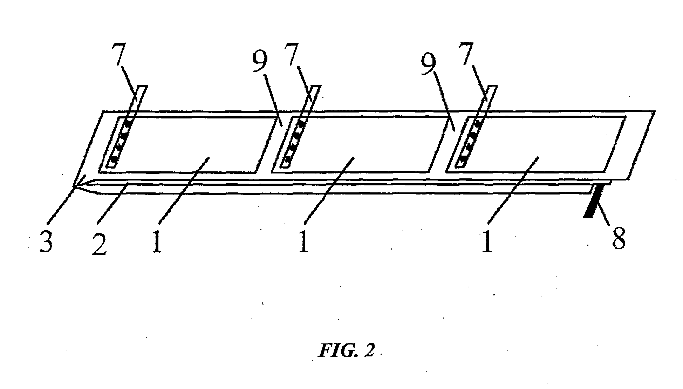

The cylindrical lithium ion secondary battery of the present invention (referring to Figs. 1, 2, and 3), includes a positive electrode 1, a negative electrode 2, separator 3 forming a cylindrically-shaped electrode group 4, along with electrolyte all encased in a battery shell 5, sealed by a battery cover 6. Therein, the positive electrode is formed by smearing an active material on the surface of an aluminum foil body, where said active material includes lithium with attachable and detachable lithium ions, and compound oxide(s) of transition metals, and the positive electrode is formed by at least two smaller electrodes (the figure illustrates three pieces). The negative electrode is formed by smearing an active material on the surface of copper foil body, where said active material includes carbon material capable of attaching and detaching lithium ions, and the negative electrode is belt-shaped. The positive electrode, the separator, and the negative electrode stacked as in Fig. 2; the negative electrode 2 is wrapped in the separator and placed below three smaller positive electrodes, allowing the negative electrode to be on the outside in rolling the positive electrodes. The three pieces of smaller positive electrodes 1 arranged to allow for separation areas 9, such that after rolling to form the cylindrically-shaped electrode group, each of the smaller electrodes are mutually separated and non-connected.

Both the positive and negative electrodes have conducting strips for current conduction. Each of the three smaller electrodes 1 forming the positive electrode has a conducting strip 7 connecting with the battery cover 6, and the negative electrode 2 has a conducting strip 8 connecting to the battery shell.

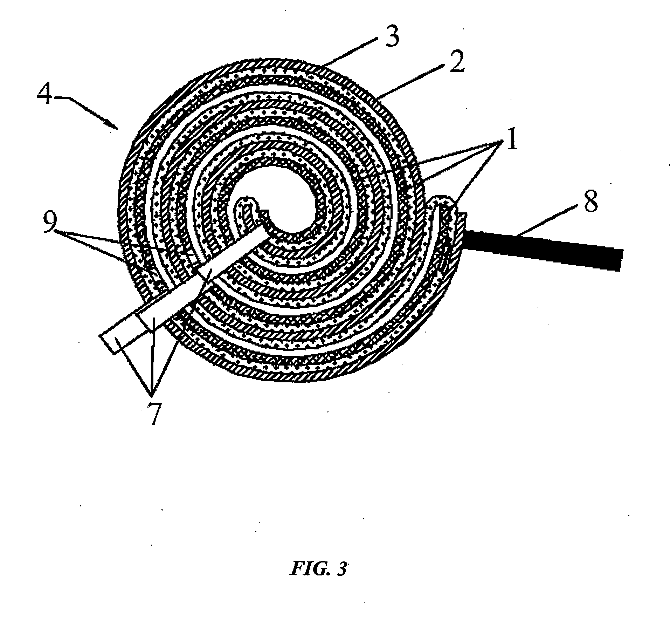

In the manufacturing of the battery, the separator 3 wraps the negative electrode 2 along its long edge and it is placed on the bottom; the three smaller pieces forming the positive electrode 1 is placed in order on the top, and a separation area 9 is created (as illustrated in Fig. 2). The conducting strips 7 of the three smaller electrodes 1 of the positive electrode and the conducting strip 8 of the negative electrode 2 are placed on the two sides. After pressing, it is rolled from the curved end of the separator to form the cylindrically-shaped electrode group 4 as illustrated in Fig. 3. This group is inserted in a battery shell 5, and the conducting strip 8 of the negative electrode 2 is curvedly bent inside bottom of the battery shell, creating an electrical contact; the conducting strips 7 of the three smaller positive electrodes all making electrical contact with the battery cover 6; the manufacturing process ends after adding electrolyte and sealing the battery.

The present invention is further described by the embodiments and testing results below.

### Embodiment 1

Manufacturing model 1865, labeled capacity being 2100mAh, a cylindrical lithium ion secondary battery, the manufacturing process is described below:

The making of the positive electrode: mixing 100 units by weight of LiCoO2 powder, 7 units by weight of crystalline-shaped carbon as conducting paste, and 7 units by weight of PVDF as sticky paste; diluting in sufficient solution ofN-methyl pyrrolidone to form a paste; smearing said compound paste on both sides of a 20µm aluminum foil to obtain positive electrodes having the dimension of 212x55.5x0.12mm for a total of three pieces.

The making of the negative electrode: mixing 100 units by weight of man-made carbon powder, 10 units by weight of PTFE as sticky paste; diluting in sufficient amount of ion-free solution to form a paste; evenly smearing said compound paste on both sides of a 10µm copper foil to obtain negative electrodes having the dimension of 700x57.0x0.14mm. On a side area not smeared with paste of each positive electrode, a strip-shaped aluminum conducting strip is ultra-sonically welded on; on a side area not smeared with paste of the negative electrode, a belt-shaped copper conducting strip is ultra-sonically welded on; and the conducting strips 7 of the positive electrodes and the conducting strip 8 are illustrated in Fig. 2.

The battery shell uses steel shell having 0.3mm in thickness; a 0.5mem through hole is prepared at the half height of the round sidewall; and said hole is sealed with tape on the outside.

In accordance with Fig. 2, using 1400x59x0.02 polypropylene as separator, after arranging the positive and negative electrodes and rolling into cylindrically-shaped electrode group, when placing said electrode group into the steel shell, the separation areas of the three piece positive electrodes are placed away from the through hole on the steel shell. The conducting strip of the negative electrode is curvedly bent on the inner bottom of the battery shell, making electrical contact. The conducting strips of the three smaller positive electrodes making electrical contact with the bottom of the battery cover. After injecting electrolyte and sealing the battery, the manufacturing is complete.

### Comparison Embodiment 1

A cylindrical lithium ion secondary battery, model 1865, has a battery core made using normal method for the manufacturing of single positive electrode plate, single negative electrode plate, and single separator all rolled into a cylindrically-shaped electrode group, labeled capacity being 2100mAh. Other than its positive electrode is one piece with a conducting strip, it is the same as embodiment 1.
I. Testing of the battery's initial use:
1. testing of the battery's internal resistance;
2. testing of the battery's initial capacity: charge the battery to 4.2v; discharge at the rate of 0.5C until it reaches 3.0V; test the capacity.

**Table 1: Test Results**

| | Battery Internal Resistance Test (mΩ) | Initial Capacity (mAh) |
|---|---|---|
| Embodiment 1 | 56 | 2050 |
| Comparison Embodiment 1 | 61 | 2030 |

II. Battery Internal Short Circuit Test using a Pin: Using a fully charged battery, removing the sealing tape on the 0.5mm through hole on the external wall, using a 0.3mm needle for testing internal short circuit to insert into said through hole, holding the inserted depth to: thickness of the steel wall + thickness of the negative electrode + thickness of the separator + 0.5 times of the thickness of the positive electrode, i.e.: 0.3 + 0.14 + 0.2 + 0.06 = 0.7 (mm), creating a short circuit between the negative electrode and outer-most small positive electrode of the battery core of the cylindrical lithium ion secondary battery.
In the needle test, from the instant when the needle is inserted 0.7mm deep, the following items are tested:
1. Change in temperature of the battery surface: Record of the temperature change of the battery surface within 20 minutes of the battery short-circuiting (see table 2).
2. Change in battery voltage: Record of battery voltage change within 20 minutes of the battery short-circuiting (see table 3).
3. In testing, observe to see if there are signs of leakage, fire or explosion (see table 4).

**Table 2 - Battery Surface Temperature Change (°C)**

| Short-Circuit Time (min.) | 2 | 4 | 6 | 8 | 10 | 12 | 14 | 16 | 18 | 20 |
|---|---|---|---|---|---|---|---|---|---|---|
| Embodiment 1 | 35 | 52 | 68 | 79 | 94 | 98 | 97 | 97 | 95 | 94 |
| Comparison Embod. 1 | 58 | 2 | 113 | 145 | 167 | x | x | x | x | x |

**Table 3 - Battery Voltage Change (V)**

| Short-Circuit Time (min.) | 0.5 | 1 | 2 | 4 | 6 | 8 | 12 | 16 | 20 |
|---|---|---|---|---|---|---|---|---|---|
| Embodiment 1 | 1.0 | 3.5 | 3.6 | 3.6 | 3.6 | 3.6 | 3.6 | 3.6 | 3.6 |
| Comparison Embodiment 1 | 1.0 | 1.3 | 1.5 | 1.4 | 1.35 | 1.4 | x | x | x |

**Table 4**

| | Leakage | Fire | Explosion |
|---|---|---|---|
| Embodiment 1 | None | None | None |
| Comparison Embodiment 1 | Leakage in 10.5 minutes | Partly burned | None |

The above tables 2 -3 recorded the corresponding test results, and it is apparent: where there is an internal short-circuiting within a certain area of the cylindrical lithium ion secondary battery of the present invention, the maximum temperature does not exceed 100 degrees, and the battery voltage only changes when there is short-circuiting, but returns to the working voltage of 3.6V, and there is no leakage, explosion or other undesirable conditions, proving the battery can continue to function. In the battery of the comparison embodiment there was leakage after 10.5 minutes, the battery became partly burned, the surface temperature reached 167 °C, and the voltage was around 1.4V; the battery became useless and cannot continue to work.
III. Testing after the battery has been short-circuited: 20 minutes after the battery has been needle short-circuited, the battery function is tested. Because the comparison embodiment has already leaked and rendered useless, it cannot be tested. In testing embodiment 1 as follows:
1. The battery internal resistance is 48 mΩ;
2. Battery capacity test: The battery is charged to 4.2V, discharge at 0.5C to 3.0V, the capacity is 1360mAh.

In comparing the characteristics of the battery in its initial use and after short-circuiting (table 5):

**Table 5**

| | Battery Internal Resistance Test (mΩ) | | Initial Capacity (mAh) | |
|---|---|---|---|---|
| | Initial Use | After Short-Circuit | Initial Use | After Short-Circuit |
| Embodiment 1 | 56 | 48 | 2050 | 1360 |
| Comparison Embodiment 1 | 61 | x | 2030 | x |

As known from table 5, the battery of the comparison embodiment is rendered useless after it short-circuits internally, while the present embodiment after short-circuiting, only the affected the functioning of the positive electrode where the short-circuit occurred, the battery capacity decreased by about one-third of the initial capacity, and the battery internal resistance decreased slightly, but the battery can be continued to be used, reliably and safely.
IV. In dissecting the above-described post-test battery, it is discovered that the conducting strip of the outer-most positive electrode of the battery of the embodiment has melted, while the conducting strips of the other two positive electrodes are fine. Because the battery of the comparison embodiment only has one electrode, the conducting strip has been charred and remains connected.

### Preferred Embodiments

In providing several smaller electrodes in order to isolate short-circuiting damaging to one of the smaller electrodes, the trade-off here is that the capacity of the battery would be decreased due to the overall capacity provided by sum of the smaller electrodes would be smaller than the overall capacity provided by a single long, belt-shaped electrode. This is because a separation area is required between the smaller electrodes. In the improved embodiments, the focus here becomes how to maximize the overall capacity of the battery.

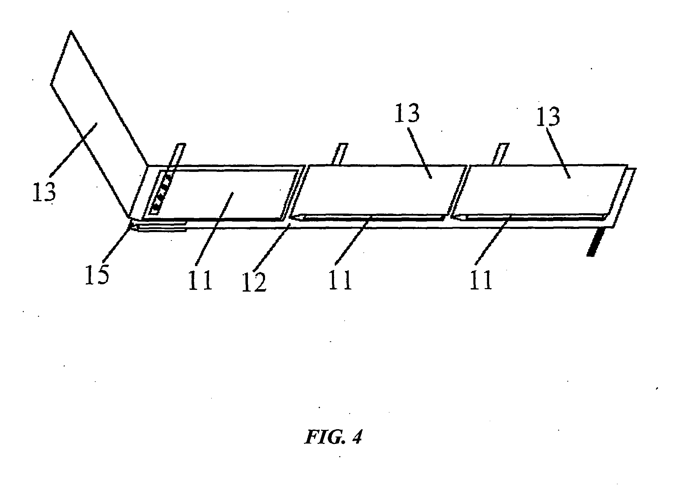

Fig. 4 illustrates one preferred method to maximize the overall capacity of the battery. Here, a small piece of u-shaped separator material 15 is placed on one end of the belt-shaped negative electrode 12. Each of the positive electrodes 11 is enveloped in separator material 13 and placed on the negative electrode 12. The entire stack is then rolled into an electrode group. Note that the main idea in this embodiment is that the smaller pieces of electrodes are individually wrapped with the separator material, thereby electrically isolated from the other pieces of small electrodes and the negative electrode. In this manner, no separation area is needed between the smaller electrodes and the battery can be packed to maximum capacity. Further note that the separator material can be cut or shaped in a variety of ways to carry out the spirit of this idea. For example, the separator material for the smaller electrodes can be a pocket with one open end, or a simple wrap around the smaller electrodes.

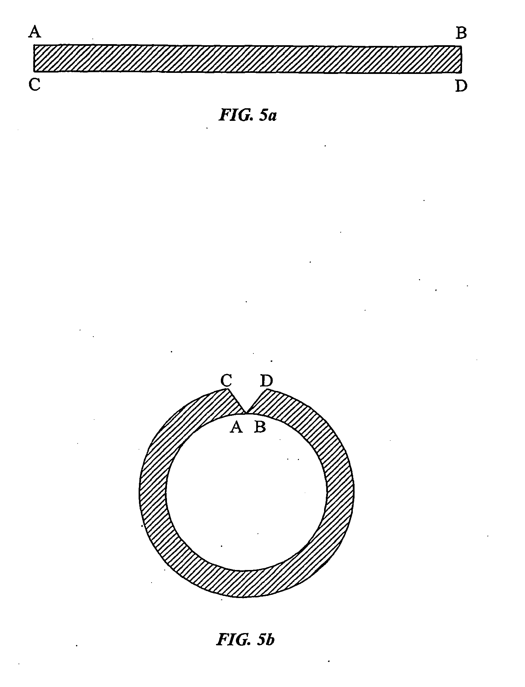

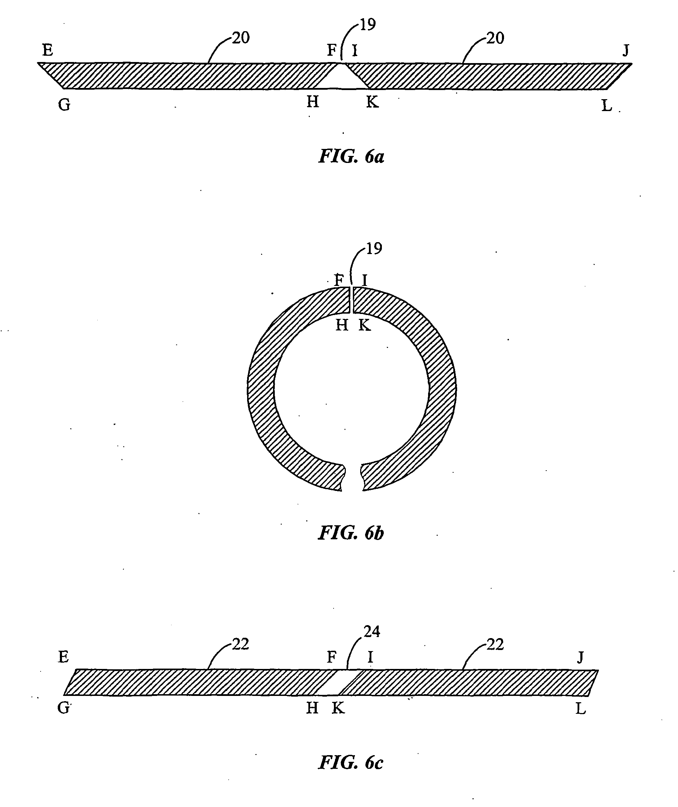

In yet another alternative method according to the invention, the separation area remains but is minimized between the smaller electrodes. From a theoretical perspective, given a rectangular object as illustrated in Fig. 5a, length L=AB=CD and thickness d=AC=BD. If this rectangular object is curved into a circular shape, then the internal circumference is length L and point A and point B meet, as is illustrated by Fig. 5b. In the outer circumference, point C and point D do not meet and the gap is 2πd. In applying this theory with a cylindrical-shaped (or any rolled-shaped) electrode group, as illustrated in Fig. 3, the electrodes of the cylindrically-shaped electrode group appear as a number of concentric circles where the smaller electrodes are separated by a separation area 19. Referring to Fig. 6a, before rolling the stacked electrode group, the separation area between the smaller electrodes is as indicated at 19. Here in this alternative embodiment, the smaller electrodes 20 are trapezoid-shaped where on one edge the length is GH and on the other edge the length is EF, where EF is longer than GH by 2πd or less. After rolling the stacked electrode group, referring to Fig. 6b, the separation area 9 is now a narrow gap where the amount of electrode is maximized.

In yet another embodiment, according to the invention referring to Fig. 6c, the smaller electrodes 22 are diamond shaped with extended edges (see FH and IK). Here, edges FH and IK are complementary shaped to provide maximum capacity and minimum gap 24 between the smaller electrodes 22. From an industrial production point of view, diamond shapes may be simpler to form than trapezoids. Note that the diamond shape edges may be shaped in any manner. The embodiments illustrated with Figs. 6a and 6c can be implemented in conjunction with wrapping each positive electrode with separation material therefore eliminating gaps between two pieces of electrodes.

While the present invention has been described with reference to certain preferred embodiments, it is to be understood that the present invention is not to be limited to such specific embodiments. Rather, it is the inventor's contention that the invention be understood and construed in its broadest meaning as reflected by the following claims. Thus, these claims are to be understood as incorporating and not only the preferred embodiment described herein but all those other and further alterations and modifications as would be apparent to those of ordinary skilled in the art.

## Claims

1. A secondary battery, comprising:
a positive electrode;
a negative electrode;
a separator;
wherein said positive electrode, said negative electrode, and said separator forming an electrode group encased in a battery shell;
wherein one of said positive electrode or said negative electrode being a belt-shaped electrode and the other electrode being formed by at least two smaller pieces of electrodes and wherein each of said smaller pieces of electrodes is enveloped in separator material such that the smaller pieces of electrodes are not electrically conducting with each other;
wherein each of said smaller pieces of electrodes is trapezoid or diamond in shape and complementary to one or more other smaller pieces of electrode in order to maximize battery capacity and minimize the separation area between said smaller pieces of electrodes;
wherein each electrode has a conducting strip for electrical current discharge; and
wherein the conducting strip of a particular positive electrode disconnects upon a short-circuit condition occurring with respect to said particular positive electrode.

2. A battery as recited in claim 1, wherein said belt-shaped electrode is placed on the outer side of said electrode group.

3. A battery as recited in claim. 1 wherein each of said smaller pieces of electrodes is placed next to each other without any separation area among them.

4. A battery as recited in claim 1 wherein one of said positive electrode or negative electrode is formed by 2-6 pieces of smaller electrodes.

5. A battery as recited in claim 1 wherein a piece of separation material wraps a selected end of said belt-shaped electrode.

6. A battery as recited in claim 1 wherein the negative electrode is a belt-shaped electrode, and the positive electrode is formed by at least two smaller pieces of electrodes.

7. A method for manufacturing a battery, comprising the steps of:
providing a belt-shaped negative electrode;
placing two or more positive electrodes on said negative electrode, each of said positive electrodes wrapped in separation material, wherein each of pieces of positive electrodes is trapezoid or diamond in shape and complementary to one or more other pieces of positive electrodes in order to maximize battery capacity and minimize the separation area between said pieces of positive electrodes;
rolling said stacked electrodes in to an electrode group;
adding electrolyte in to said battery shell; and
sealing said battery case with a battery cover.

8. A method as recited in claim 7 wherein in said providing step further including wrapping a piece of separation material on a selected end of said belt-shaped electrode.

## Patentansprüche

1. Akkumulator, umfassend:
eine positive Elektrode:
eine negative Elektrode;
ein Trennelement;
wobei die positive Elektrode, die negative Elektrode und das Trennelement eine Elektrodengruppe bilden, welche in einer Batteriehülle eingekapselt ist;
wobei die positive Elektrode oder die negative Elektrode eine bandförmige Elektrode ist und die andere Elektrode durch zumindest zwei kleinere Elektrodenabschnitte gebildet ist und jeder der kleineren Elektrodenabschnitte in Trennmaterial derart eingehüllt ist, dass die kleineren Elektrodenabschnitte nicht elektrisch leitend miteinander verbunden sind;
wobei jeder der kleineren Elektrodenabschnitte trapezoid- oder rombusförmig und komplementär zu einem oder mehreren anderen kleineren Elektrodenabschnitten ist, um die Akkumulatorkapazität zu maximieren und die Trennbereiche zwischen den kleineren Elektrodenabschnitten zu minimieren;
wobei jede Elektrode ein Verbindungsband zur Entladung von elektrischem Strom hat; und
wobei das Verbindungsband einer einzelnen positiven Elektrode sich bei einem Kurzschlusszustand abtrennt, welcher bezüglich der einzelnen positiven Elektrode eintritt.

2. Akkumulator nach Anspruch 1, wobei die bandförmige Elektrode auf der anderen Seite der Elektrodengruppe angeordnet ist.

3. Akkumulator nach Anspruch 1, wobei die kleineren Elektrodenabschnitte nebeneinander ohne einen Trennbereich dazwischen angeordnet sind.

4. Akkumulator nach Anspruch 1, wobei die positive Elektrode oder die negative Elektrode durch 2 bis 6 kleinere Elektrodenabschnitte gebildet ist.

5. Akkumulator nach Anspruch 1, wobei ein Abschnitt des Trennmaterials ein ausgewähltes Ende der bandförmigen Elektrode einhüllt.

6. Akkumulator nach Anspruch 1, wobei die negative Elektrode eine bandförmige Elektrode ist, und die positive Elektrode aus zumindest zwei kleineren Elektrodenabschnitten gebildet ist.

7. Verfahren zur Herstellung einer Batterie, umfassend die Schritte:
Vorsehen einer bandförmigen negativen Elektrode;
Anordnen von zwei oder mehr positiven Elektroden auf der negativen Elektrode, wobei jede der positiven Elektroden in Trennmaterial eingehüllt ist und jeder der Abschnitte der positiven Elektroden trapezoid- oder rombusförmig und komplementär zu einem oder mehreren anderen Abschnitten der positiven Elektroden ist, um die Batteriekapazität zu maximieren und die Trennbereiche zwischen den Abschnitten der positiven Elektroden zu minimieren;
Aufwickeln der geschichteten Elektroden in eine Elektrodengruppe;
Hinzufügen von Elektrolyt in die Batteriehülle; und
Abdichten des Batteriegehäuses mit einem Batteriemantel.

8. Verfahren nach Anspruch 7, wobei der Schritt des Vorsehens des Weiteren das Einwickeln eines Abschnittes des Trennmaterials um ein ausgewähltes Ende der bandförmigen Elektrode umfasst.

## Revendications

1. Une batterie secondaire, comprenant:
- une électrode positive;
- une électrode négative;
- un séparateur;
où ladite électrode positive, ladite électrode négative, et ledit séparateur formant un groupe électrode capsulé dans un boîtier de batterie;
où l'une d'entre ladite électrode positive ou ladite électrode négative étant une électrode en forme de bande et l'autre électrode étant formée d'au moins deux pièces plus petites d'électrodes et où chacune d'entre lesdites pièces plus petites d'électrodes est enveloppée dans le matériau séparateur de sorte que les pièces plus petites d'électrodes ne soient pas électriquement conductrices l'une avec l'autre;
où chacune desdites pièces plus petites d'électrodes est de forme trapézoïdale ou de rhombe et complémentaire à l'une ou plusieurs autres pièces plus petites d'électrodes pour maximiser la capacité de la batterie et minimiser la zone de séparation entre lesdites pièces plus petites d'électrodes;
où chaque électrode présente une bande conductrice pour le décharge de courent électrique; et
où la bande conductrice d'une électrode positive particulière se déconnecte à un état de court-circuit survenant à l'égard de ladite électrode positive particulière.

2. Une batterie selon la revendication 1, où ladite électrode en forme de bande est placée sur le côté extérieure dudit groupe électrode.

3. Une batterie selon la revendication 1, où chacune desdites pièces plus petites d'électrodes est placée près d'autre sans aucune zone de séparation entre celles-ci.

4. Une batterie selon la revendication 1 où l'une d'entre ladite électrode positive ou électrode négative est formée de 2-6 pièces d'électrodes plus petites.

5. Une batterie selon la revendication 1 où une pièce de matériau de séparation enroule une extrémité sélectée de ladite électrode en forme de bande.

6. Une batterie selon la revendication 1 où l'électrode négative est une électrode en forme de bande, et l'électrode positive est formée par au moins deux pièces plus petites d'électrodes.

7. Un procédé de fabrication une batterie, comprenant les étapes de:
- pourvoir une électrode négative en forme de bande;
- placer deux ou plusieurs électrodes positives sur ladite électrode négative, chacune desdites électrodes positives enroulée en matériau de séparation, où chacune des pièces d'électrodes positives est de forme trapézoïdale ou de rhombe et complémentaire à l'une ou plusieurs autres pièces d'électrodes positives pour maximiser la capacité de la batterie et minimiser la zone de séparation entre lesdites pièces d'électrodes positives;
- rouler lesdites électrodes empilées dans un groupe d'électrodes;
- ajouter l'électrolyte dans ledit boîtier de batterie; et
- fermer ladite batterie avec un couvercle de batterie.

8. Un procédé selon la revendication 7 où dans ladite étape d'assurément incluant de plus l'enroulement d'une pièce de matériau de séparation sur une extrémité sélectée de ladite électrode en forme de bande.
